# EUROPEAN PATENT APPLICATION

(11) **EP 3 937 054 A1**
(43) Date of publication of application: **12.01.2022**
(21) Application number: 21183346.2
(22) Date of filing: 02.07.2021
(51) Int. Cl.: G06F 21/64

(54) **SYSTEM FOR SIGNING WITH A QUALIFIED ELECTRONIC SIGNATURE IN A MOBILE ENVIRONMENT**

(30) Priority: 09.07.2020 SK 500392020
(71) Applicant: Ardaco, a.s., 841 01 Bratislava (SK)
(72) Inventor: Margala, Richard, 900 31 Stupava (SK); Hájek, Juraj, 900 46 Most pri Bratislave (SK); Pal ovi ová, Zuzana, 917 02 Trnava (SK)
(74) Representative: Litváková a spol., s.r.o.

(57) **Abstract**

A system for signing with a qualified electronic signature in a mobile environment comprises a mobile device (1) for remote signing comprising a biometric document reader (3), and a dynamic authenticator (5); a user identity and access rights control module (13) comprising an identity and access rights administration block (14) and a biometric server block (15) for server authentication of identities; a control and signing server (6) comprising an administration block (7) and a task processing controlling block (8); a key management module (9); external documents storage (12).

The mobile device (1) for remote signing is connectable to the user identity and access rights control module (13) and to the control and signing server (6), the control and signing server (6) is connected to the key management module (9) and to the user identity and access rights control module (13) and the control and signing server (6) are connected to the external documents storage (12).

## Description

### Technical Field

The invention relates to a system for signing with a qualified electronic signature in a mobile environment and belongs to the information technology field.

### Background Art

To ensure digital signing of documents, there are several advanced solutions that can be categorized according to how high the security and therefore the "strength" of the signature they allow. It is also possible to divide them according to which environment can be used for the implementation of the signature and what tools, software or hardware, are necessary in the signing process.

The electronic signature constitute data in electronic form which are connected to or logically associated with other data in electronic form and used by the user for signing.

The basic characteristics of the different types of signatures are:
- integrity - the possibility to prove that there has been no change in the signed data after signing,
- authenticity - the possibility to verify the originality, the identity of the subject to which the electronic signature belongs,
- non-repudiation - the signatory cannot claim that he/she has not signed the signed data.

The electronic signature does not ensure any of the basic characteristics of signatures. Typically, this is the addition of identification data to an electronic document, such as the identity of the signatory or a handwritten signature image. It is realistically unusable for legal purposes because it would require a high degree of proof of integrity, authenticity and non-repudiation.

A digital signature or an advanced electronic signature ensures the integrity of the signed data using cryptographic methods based on the specification of regulations such as eIDAS (EU) or DSS (USA). Such a signature is not equivalent to a handwritten signature (eIDAS) and it is not possible to ensure the authenticity and, especially, non-repudiation.

A qualified electronic signature is a digital signature (advanced electronic signature), the specific parameters of which are defined within the eIDAS regulation. It is based on a qualified certificate issued by a qualified certification authority and made using a qualified electronic signature device. Such a signature is equivalent to a handwritten signature for legal purposes and fully ensures the integrity, authenticity and non-repudiation.

Signing with the qualified electronic signature can be performed by several means: using a local native application installed on a desktop operating system or through an interface using a browser or in a native mobile application. Advanced signing, using either a digital signature or a qualified electronic signature, necessarily requires a signing certificate, a private and a public key.

Local desktop applications provide signing functionality directly on the signing user's computer, without the need for a network connection, and alternatively also provide signature verification with a connection to a special server assigned to provide such services.

Browser-based applications operate on a client-server architecture providing signature services. In the case they allow signing using a hardware device (e.g. card, USB token), they use various plugins (java, applet) that allow communication through the interface on the client computer.

Mobile applications allow to perform signing using a mobile device. They usually require an Internet connection and may also require additional hardware means to perform the signing.

Since the present invention is directed to providing the electronic signature in the mobile environment, therefore, the choice of application is limited to applications in the mobile environment. Such applications include:
DocuSign application uses digital signature of documents, stores private keys and performs signatures in the central HSM, provides integration on MS AD, LDAP, provides integration on several types of DMS and Workflow systems and supports various types of documents such as MS Office, PDF, TXT, etc. This application offers primarily an electronic signature in the form of a handwritten signature image. At the same time, it provides extended services as paid enterprise services.

SignNow application does not support digital signature, but only an electronic signature in the form of a digital image of a handwritten signature.

Adobe Sign application provides a wide range of options, from a simple electronic signature to a digital signature. Extended functionality (such as a digital signature) is only possible with Enterprise versions of the application.

Patents, technologies and solutions currently exist in this field.

Patent No. US 9,565,188 describes the system and method of inserting a handwritten signature into a secure electronic document. The user is securely certified by a system created by an alphanumeric code and mobile device identification. Subsequently, the signature is inserted into an electronic document and securely stored on the central server.

Documents "Electornic Signatures and Infastructeres (ESI); ASiC Baseline Profile" a "The framewok for standardization of signatures; Standards for AdES digital signatures in mobile and distributed environment" relate to the standards of the European Telecommunications Standards Institute (ETSI). These documents provide a framework for further standardisation for the creation and verification of AdES digital signatures in mobile and distributed environments supported by remote servers.

Document "Qualified Mobile Server Signature" relates to mobile signature-based approach, it authenticates the signatory by trusted means. Strong authentication of identity is ensured by two factors, namely knowledge of the PIN code and submission of a valid card of the subscriber identification module. This document focuses on meeting the standards required within the EU.

Mobil Connect service allows authentication using a mobile device in cooperation with mobile operators. This service presents a secure universal identity that offers a simple and trusted way for mobile users to share sensitive data and perform transactions with confidence. The service allows fast, global and cost-effective authentication, authorization and secure authentication of identity.

The main shortcomings of these existing solutions are:
- Most existing solutions do not support digital signature, but only electronic signature in the form of a handwritten signature image.
- If the solution supports a digital signature, no solution supports a qualified electronic signature in a mobile environment.
- Solutions supporting a qualified electronic signature require the use of additional hardware components, e.g. eID card.
- Solutions and applications that provide digital signature with a certificate and signature key provide services only as enterprise solutions that are not usable by ordinary users.
- Existing solutions do not include the possibility of using documents containing biometric data that provide a relevant source of biometric data meeting international standards, such as a biometric document in accordance with the requirements International Civil Aviation Organization (ICAO).

### Nature of Invention

The above-mentioned shortcomings are eliminated by the system for signing with a qualified electronic signature in a mobile environment according to the present invention, the nature of which lies in the fact that it contains:
- a mobile device for remote signing that is equipped with a mobile application for remote signing and includes a biometric document reader and a dynamic authenticator. For authentication and authorization services for remote signing, the biometric factor provided on the basis of server biometric verification of the data captured by the mobile camera is preferably used, therefore the mobile device preferably comprises a camera allowing the capture of biometric data. The camera is connected to a biometric client module which processes biometric data captured by the camera. The biometric document reader allows reading biometric data from the biometric document. The dynamic authenticator provides an additional authentication layer of multifactor authentication;
- the user identity and access rights control module comprises an identity and access rights administration block and a biometric server block for server authentication of identities and provides multifactor authentication of the mobile application for remote signing;
- the control and signing server comprises an administration block for configuration and a task processing controlling block for performing tasks;
- the key management module is realized by the hardware component of the Hardware Security Module. Hardware Security Module, which provides for the control and signing server highly secure encryption procedures for key generation, data encryption and decryption and digital signature creation and verification. The key management module comprises a security storage for signing certificates, including private keys, and private key signing block.
- external documents storage.

The mobile device for remote signing is connectable to the user identity and access rights control module and to the control and signing server. The control and signing server is connected to the key management module and to the user identity and access rights control module and the control and signing server are connected to the external documents storage.

The system according to the present invention uses a mobile device for signing at the level of a qualified electronic signature without the need for additional hardware device, wherein the security of the solution is ensured by multifactor authentication and the storage of signed documents itself is realized using dynamically configurable storages. The form of server (remote) signing ensure higher security against theft and misuse of the signing certificate.

The mobile device for remote signing provides the user with remote server signing functionality using a mobile remote signing application installed on the mobile device for remote signing. The mobile application includes the provision of data acquisition functionality to verify user identity and authorize access to the remote signing services interface. For the purposes of authentication and authorization of remote signing services, the biometric factor of the user's face provided on the basis of server biometric verification of data captured by the mobile camera processed by the biometric client module is used. The dynamic authentication element by the dynamic authenticator module provides an additional authentication layer of multifactor authentication. The main purpose of a mobile device for remote signing is in cooperation with a mobile application of remote signing to mediate electronic operations of signing documents in a mobile environment. For these processes, it uses services and communication using a secure two-way SSL connection over a network connection (mobile data interface or Wi-Fi).

The mobile device is ready to read biometric data from a biometric document using a biometric document reader. Biometric data from a biometric document will provide the solution with the possibility of another way of obtaining data on a server biometric face template of the user of a remote server signing.

Multifactor authentication is used when realising a signature using a mobile device, (at least 3-factor authentication with different authentication categories), communication via multiple communication channels and end-to-end communication encryption using a two-way SSL connection.

The following authentication categories and factors are used for user login authentication purposes:
- Inherent factor
   o Photo of the user's face - the verification of liveliness directly on the mobile device and pre-processing of the photo on the mobile device is assumed
- Holding factor
   o Mobile device authentication using a dynamically generated authentication key
   o Automatic authentication with SSL Authentication Certificate (two-way SSL connection)
   o Automatic authentication of the generated unique ID for the mobile application, or identifiers of the provided operating systems of the mobile device
- Factor of knowledge
   o Optional password to access the application
   o PIN code for the signing service (signing itself)

The user identity and access rights control module ensures user identity management and access rights management to all protected resources used in the remote server signing solution (mobile remote signing application, documents in external storage and access to qualified electronic signature document signing functionality). It stores information about users and the access rights assigned to them. Provides user authentication functionality and authorizes access to mobile application functionality, signed documents stored in external storage, and also authorizes access to qualified electronic signature signing functionality.

The control and signing server with the key management module controls the method of signing documents with a qualified electronic signature. It contains an administration block enabling the configuration of the control and signing server, including the modification of approval scenarios for signing by a qualified electronic signature by several users. Performing tasks is controlled by a job processing control block. The key management module provides a secure storage of signing certificates (including private keys), allows the creation of a signing certificate, and for authenticated and authorized users provides the possibility of signing with the private key. The key management module also comprises its own certificate for encrypting the received PIN code for signing.

The basic advantage of the system for signing with a qualified electronic signature in a mobile environment according to present invention using a mobile application secured by multifactor biometric authentication is the combination of the mobile environment, server signing and qualified electronic signature together with ensuring a high degree of security and multifactor authentication.

### Mobile environment

Signing in the mobile environment is a functionality that is in high demand from the user's point of view. It is associated with a very rapid expansion of the use of smartphones for the implementation of common work activities. Nowadays, the Internet connection is affordable and at the same time usable in most territories of developed countries.

### Server signing

It is currently common for users to use a variety of cloud services to allow remote, shared, and efficient work. Just central server solutions allow to minimize the risks associated with hardware loss, attacks, etc. and allow the security of centrally stored data and services at a significantly higher level than with locally distributed hardware components. Another great advantage is that server signing allows the use of services without additional hardware elements, which are designed to implement the sensitive functionality of the private key store and the signing itself.

### Qualified electronic signature

A qualified electronic signature (KEP) is defined within eIDAS and is legally equivalent to a handwritten signature. Therefore, the providing of the signature service in the form of KEP means full-fledged electronic signing without the need for possible bilateral agreements and with the certainty of acceptance by all partners, whether state or public institutions and legal or natural persons. At the same time, all this is valid throughout the EU.

### Authentication

- Personal registration and activation of the mobile device
- Authentication certificate
- Biometric authentication
- Multifactor authentication with multiple categories

### High degree of security

- Secure server HSM
- Secure two-way SSL communication
- Multichannel communication for authentication

### Brief Description of Drawings

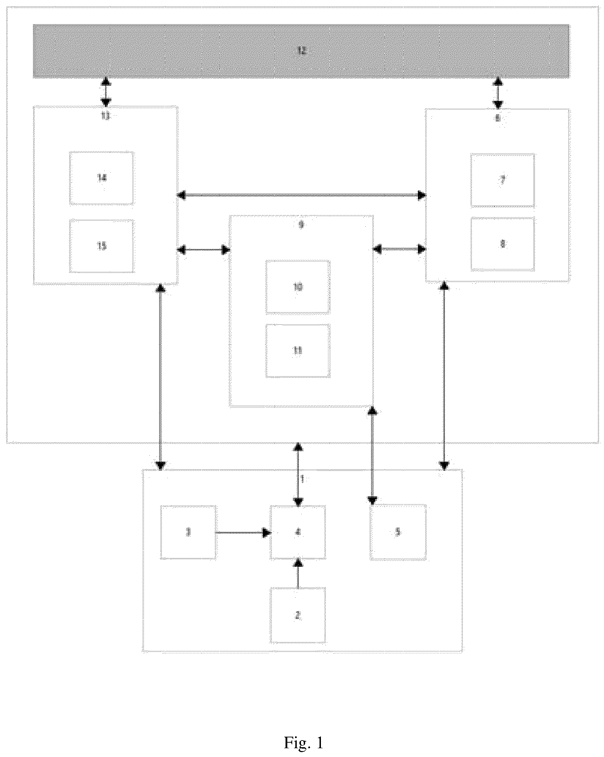

Figure 1: Schematic representation of a system for signing with a qualified electronic signature using a mobile application ensured by multifactor biometric authentication showing the internal structure of architecturally/structurally significant elements of the invention.

### Examples of Embodiments

### Example 1

The qualified electronic signature signing solution according to present invention is implemented in an enterprise.

The system comprises mobile devices 1 for remote signing, which are connected to the Mobile Device Management system of the organization, through which security policies are enforced on the mobile device 1. Mobile Device Management also distributes a mobile remote signing application for mobile devices 1 registered in the Mobile Device Management system.

Registration of remote server signing users takes place in the organization centrally, through an authorized person who verifies the employee's identity, captures the employee's biometric data necessary for server-side authentication, generates signing keys and then adds the user profile to the Mobile Device Management system of the organization.

Facial biometric data can be captured either by the camera 2, which is part of the mobile device 1 and these biometric data are processed by the biometric client module 4 to which the camera 2 is connected, or directly by a camera connected to the authorized person's computer, or using a biometric document of the future user of the remote server signing verified by the authorized person, from where the biometric document reader 3 reads them and the authorized person re-verifies the thus obtained image of the person before saving.

The mobile device 1 for remote signing further comprises a dynamic authenticator 5, which provides an additional authentication layer of multifactor authentication, which is at least three-factor, the authentication involving entering a password and PIN code and storing the signed documents itself using dynamically configurable storages.

The system for signing with a qualified electronic signature in a mobile environment further comprises a user identity and access rights control module 13, which comprises an identity and access rights administration block 14 and a biometric server block 15 for server authentication of identities and providing multifactor authentication for the mobile application for remote signing.

User identity and access rights control module 13 provides Identity and Access Management system providing support for management of users and roles in the organization. The system for signing with a qualified electronic signature in a mobile environment will be enriched with a biometric block 15 providing server facial authentication as part of multifactor authentication.

The system for signing with a qualified electronic signature in a mobile environment further comprises a control and signing server 6, which comprises an administration block 7 for configuration and a task processing controlling block 8, connected to a key management module 9 containing a security storage 10 for signing certificates including private keys, private key signing block 11;

The control and signing server 6 with the key management module 9 is installed within the data centre of the organization. The key management module 9 is realized by the hardware component of the Hardware Security Module. Hardware Security Module, which provides highly secure encryption procedures for the control and signing server 6 for key generation, data encryption and decryption and digital signature creation and verification. Key management module 9 comprises a security storage 10 for signing certificates including private keys and private key signing block 11. The control and signing server 6 cooperates with the central workflow system of the organization and ensures the control of signing scenarios and consistency in the performance of tasks consisting of the approval and signing of one or more documents by the employees of the organization.

The system for signing with a qualified electronic signature in a mobile environment further contains an external documents storage 12.

External documents storage 12 is realized by the Document Management System of the organization. It provides space for documents processed during remote server signing using a mobile application.

The mobile device 1 for remote signing is connectable to the user identity and access rights control module 13 and to the control and signing server 6. The control and signing server 6 is connected to the key management module 9 and the user identity and access rights control module 13, and the control and signing server 6 is connected to an external documents storage 12.

The system for signing with a qualified electronic signature according to present invention utilizes a network connection, which can be a mobile interface or Wi-Fi.

### Example 2

It is identical to the example of embodiment 1 with the difference that the system for signing with a qualified electronic signature according to present invention is not only used within one organization, but is used for remote server signing using a mobile application secured by multifactor biometric authentication by its provider. The server parts of the solution, the user identity and access rights control module 13 and the control and signing server 6 with the key management module 9, are operated by the remote server signing service provider. The solution uses a storage of cloud services, which creates a separate account for each customer for storing and managing documents within remote server signing using a mobile application. The remote signing client application is distributed through standard customer mobile device operating system platforms/stores. Each customer has the opportunity to set up the system according to their needs using the user identity and access rights control module 13 and also the administration block 7 for the configuration of the control and signing server. Adding users within a specific customer can be done either using the mobile device 1 and the future user's remote server signing biometric document, from which they are read by the biometric document reader 3 and re-verified by the authorized person before saving, or through the remote service provider's client centre of the server signing.

### References

- 1 -: mobile device for remote signing
- 2 -: camera
- 3 -: biometric document reader
- 4 -: biometric client module
- 5 -: dynamic authenticator
- 6 -: control and signing server
- 7 -: administration block
- 8 -: task processing controlling block
- 9 -: key management module
- 10 -: security storage for signing certificates
- 11 -: private key signing block
- 12 -: external documents storage
- 13 -: user identity and access rights control module
- 14 -: identity and access rights administration block
- 15 -: biometric server block

## Claims

1. A system for signing with a qualified electronic signature in a mobile environment, **characterized in that** it comprises:
• a mobile device (1) for remote signing comprising a biometric document reader (3), and a dynamic authenticator (5) providing an additional authentication layer of multifactor authentication, being equipped with a mobile application for remote signing;
• a user identity and access rights control module (13) comprising an identity and access rights administration block (14) and a biometric server block (15) for server authentication of identities and providing multifactor authentication for the mobile application for remote signing;
• a control and signing server (6) comprising an administration block (7) for configuration and a task processing controlling block (8) for performing tasks;
• a key management module (9) comprising a security storage (10) for signing certificates, including private keys, private key signing block (11) ;
• external documents storage (12);
wherein
the mobile device (1) for remote signing is connectable to the user identity and access rights control module (13) and to the control and signing server (6); the control and signing server (6) is connected to the key management module (9) and to the user identity and access rights control module (13); and the control and signing server (6) is connected to the external documents storage (12).

2. The system for signing with a qualified electronic signature according to claim 1, **characterized in that** the mobile device (1) for remote signing comprises a camera (2) and a biometric client module (4), wherein the camera (2) is connected to the biometric client module (4), which processes biometric data captured by the camera (2).

3. The system for signing with a qualified electronic signature according to any one of claims 1 and 2, **characterized in that** the key management module (9) comprises a Hardware Security Module providing highly secure encryption procedures for key generation, data encryption and decryption and digital signature creation and verification for the control and signing server (6).

4. The system for signing with a qualified electronic signature according to any one of claims 1 to 3, **characterized in that** the dynamic authenticator (5) provides an additional authentication layer of multifactor authentication which is at least three-factor, wherein the authentication comprises entering a password and PIN code; and storing of the signed documents is realized by using dynamically configurable storages.

5. The system for signing with a qualified electronic signature according to any one of claims 1 to 4, **characterized in that** it uses a network connection, which can be a mobile interface or Wi-Fi.
